Europäisches Patentamt

European Patent Office

Office européen des brevets

(11) Veröffentlichungsnummer: **0 151 556**
A2

## (12) EUROPÄISCHE PATENTANMELDUNG

(21) Anmeldenummer: 85810038.1

(22) Anmeldetag: 04.02.85

(51) Int. Cl.⁴: **G 02 B 6/26**

(30) Priorität: 08.02.84 CH 580/84

(43) Veröffentlichungstag der Anmeldung:
14.08.85 Patentblatt 85/33

(84) Benannte Vertragsstaaten:
DE FR GB SE

(71) Anmelder: Perren, Benno
Austrasse 33
CH-5430 Wettingen(CH)

(72) Erfinder: Perren, Benno
Austrasse 33
CH-5430 Wettingen(CH)

(74) Vertreter: Winkler, Kurt, Dr.
Mellingerstrasse 69
CH-5400 Baden(CH)

(54) Lichtwellenleiter mit Koppelglied.

㊼ Das Koppelglied für einen Lichtwellenleiter mit einem Faserbündel (1) weist mindestens ein Prisma (5) als Reflektor zur Reflexion von Sendestrahlen (6) in das Faserbündel und/oder von Empfangsstrahlen (7) aus dem Faserbündel auf, welches an der plan geschliffenen und optisch polierten Stirnfläche (4) des Faserbündels (1) angeordnet ist. Es wird damit eine einfache und sehr kompakte Bauweise bei kleinsten Abmessungen erreicht. Der Lichtwellenleiter mit Koppelglied kann im Zusammenhang mit Lichtschranken, Druck- oder Temperaturmessungen, Farberkennungssystemen, Flüssigkeitssensoren, Reflexionslichtschranken usw. verwendet werden.

Fig.2

EP 0 151 556 A2

## Lichtwellenleiter mit Koppelglied

Die Erfindung betrifft einen Lichtwellenleiter mit Koppelglied, der mindestens ein Faserbündel aufweist.

Die Anwendung von Lichtwellenleitern in Bündelform nimmt, insbesondere beim Bau optischer Sensoren, einen immer grösser werdenden Raum ein. Dabei ist es unbedingt erforderlich, dass keine Strahlen direkt vom Sender zum Empfänger gelangen.

Der Erfindung liegt die Aufgabe zugrunde, bei einem Lichtwellenleiter der eingangs genannten Art das Ein- und/oder Auskoppeln der Strahlen mit kleinstem baulichen und räumlichen Aufwand zu ermöglichen.

Die Lösung dieser Aufgabe besteht darin, dass an einem Faserbündelende mindestens ein Reflektor zur Reflexion der Sendestrahlen in das Faserbündel und/oder der Empfangsstrahlen aus dem Faserbündel vorgesehen ist. Solcherart wird eine einfache und sehr kompakte Bauweise mit kleinsten Abmessungen erreicht.

Nachstehend werden Ausführungsbeispiele der Erfindung und ein Detail dazu anhand der Zeichnung näher beschrieben. Es zeigen:

Fig.1 einen Lichtwellenleiter mit einem Koppelglied, bei dem die Sendestrahlen eingekoppelt werden;

Fig.2 einen Lichtwellenleiter mit einem Koppelglied, bei dem die Sende- und die Empfangsstrahlen ein- bzw. ausgekoppelt werden;

Fig.3 einen Berührungstaster mit einem Reflektor.

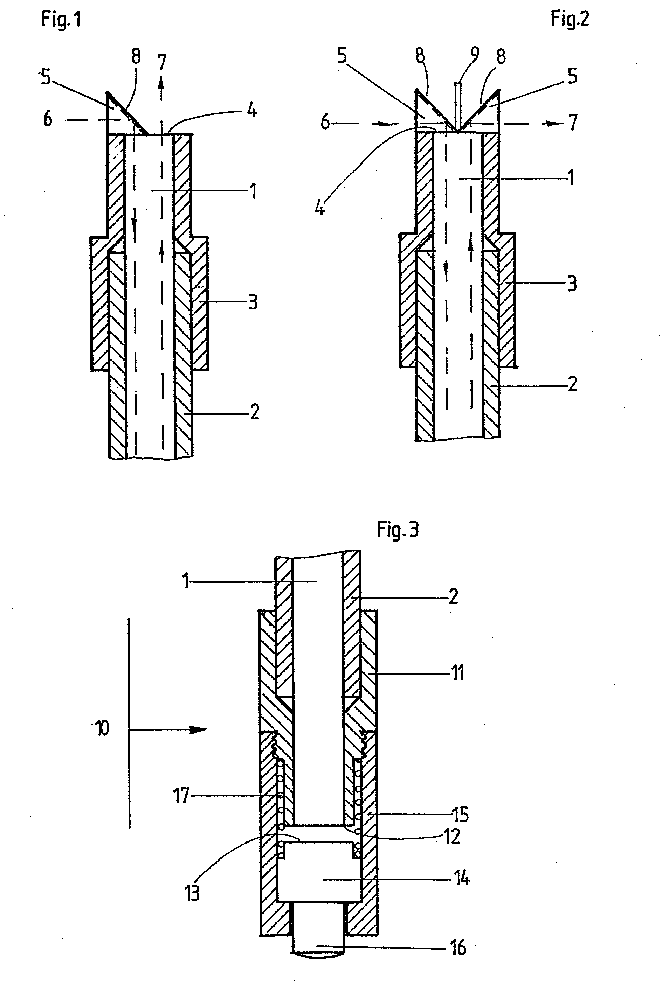

In Fig.1 ist die einfachste Form eines Koppelgliedes dargestellt. Das Glasfaserbündel 1 ist von der Ummantelung 2 umgeben. Das eine Ende des Faserbündels ist durch die Hülse 3 gefasst und mit dieser verkittet. Die Stirnfläche 4 ist plan geschliffen und optisch poliert. Auf die Stirnfläche 4 ist als Reflektor das lichtdurchlässige, gleichseitige 90°-Prisma 5 mit der einen Kathetenfläche aufgekittet, auf dessen Hypothenusenfläche die Reflexionsschicht 8 aufgebracht ist. Die von einem (nicht gezeichneten) Sender ausgehenden Sendestrahlen 6 treten an der freien Kathetenfläche in das Prisma 5 ein und werden über die Reflexionsschicht 8 dem Faserbündel 1 zugeführt. Je nachdem, wieviele Fasern des Bündels vom Prisma 5 überdeckt sind, werden mehr oder weniger Fasern von den Sendestrahlen 6 beaufschlagt. Die durch das Faserbündel 1 weitergeleiteten Sendestrahlen 6 werden am anderen Ende des Faserbündels in einem Sensor (beispielsweise gmäss Fig.3) reflektiert und nun als Empfangsstrahlen 7 durch andere Fasern des Bündels 1 zurückgeleitet. Sie werden durch den frei gebliebenen Teil der Stirnfläche 4 abgestrahlt und treffen auf den (nicht gezeichneten) Empfänger.

Das Prisma 5 - es kann natürlich auch ein anderer geometrischer Körper als Reflektor gewählt werden - ist aus Glas, kann aber auch aus Kunststoff sein, und ist direkt auf die Stirnfläche 4 aufgespritzt. Um möglichst viele Strahlen in den Lichtwellenleiter einzuspeisen, ist es von Vorteil, den Brechungsindex des Prismenmaterials möglichst hoch zu wählen; er soll mindestens 1,45 betragen. Das Koppelglied kann auch derart ausgebildet sein, dass das Prisma 5 nicht auf der Stirnfläche 4 haftet, sondern in einer Halterung befestigt ist, in welche das Faserbündel 1 einsteckbar und somit auswechselbar ist.

Die Ausführung nach Fig.2 ist ähnlich jener nach Fig.1, doch ist hier ein weiteres Prisma 5 für die Reflexion der aus dem Faserbündel 1 austretenden Empangsstrahlen 7 vorgesehen. Jedes Prisma überdeckt ungefähr die halbe Stirnfläche 4. Um absolut sicher zu sein, dass nicht irgendwelche Streustrahlen von der Sende- auf die Empfangsseite gelangen, kann zwischen den beiden Prismen 5 noch die Strahlenbarriere 9 angeordnet sein.

Der Lichtwellenleiter kann zwei Faserbündel aufweisen, doch ist es naheliegenderweise von Vorteil, sowohl für die gesendeten als auch für die empfangenen Strahlen das selbe Faserbündel zu verwenden, und zwar für jedes Strahlenbündel ungefähr die Hälfte der Fasern. Die Anzahl der Fasern eines Bündels kann bis auf zwei heruntergehen. Ferner können auch mehr als zwei Reflektoren auf die Stirnfläche 4 des Faserbündels aufgekittet oder aufgespritzt sein. Ihre Anzahl hängt im wesentlichen von der Grösse der zur Verfügung stehenden Fläche und der Ausführungsform der Reflektoren ab. Auch kann das Koppelglied aus zwei Strahlenquellen, z.B. mit unterschiedlicher Wellenlänge, beschickt werden und über einen weiteren Lichtwellenleiter können die empfangenen Strahlen auf zwei für die entsprechnden Wellenlängen selektive Empfänger geführt werden.

Die Fig.3 zeigt einen als Berührungstaster 10 ausgebildeten Sensor. Hier ist das andere Ende des Faserbündels 1 durch die Hülse 11 gefasst. Die Stirnfläche 12 von Faserbündel und Hülse ist ebenfalls plan geschliffen und optisch poliert. Auf die Hülse 11 ist die Führungshülse 15 aufgeschraubt, welche zur Führung des mit dem Betätiger 16 ausgestatteten Zylinders 14 dient. Die freie Stirnflä - che des Zylinders 14 ist als Reflektor 13 ausgebildet. Er wird durch die Druckfeder 17 auf Abstand gegenüber der Stirnfläche 12 des Lichtwellenleiters gehalten.

0151556

Wird der Reflektor 13 durch Drücken auf den Betätiger 16 in Kontakt mit der Stirnfläche 12 gebracht, so werden die gesamten Strahlen 6 in das Sendefaserbündel zurückreflektiert und folglich wird die Intensität der Empfangsstrahlen praktisch null. Mit zunehmender Entfernung des Reflektors 13 von der Stirnfläche 12 nimmt die Intensität der Empfangsstrahlen zu, bis sie ein Maximum erreicht; bei weiterer Vergrösserung der Entfernung nimmt die Intensität der empfangenen Strahlen wieder ab.

Der Auflösungsgrad dieses Berührungstasters beträgt einige Mikron. Je nach Ausführungsform kann er in Zusammenhang mit einer Druckmessdose zur Drucküberwachug oder, wenn er mit einem Bimetall verknüpft ist, als Temperaturmessgerät verwendet werden.

Am Faserende können die verschiedensten optischen Systeme angebracht werden, so dass mit dem Lichtwellenleiter mit Koppelglied einfache Reflexionslichtschranken, Farberkennungssysteme, Flüssigkeitssensoren usw. gebaut werden können. Ferner kann der Lichtwellenleiter mit Koppelglied zur Bildung von Lichtschranken verwendet werden.

Patentansprüche

1. Lichtwellenleiter mit Koppelglied, der mindestens ein Faserbündel aufweist, dadurch g e k e n n z e i c h - n e t , dass an einem Ende des Faserbündels (1) mindestens ein Reflektor (5) zur Reflexion von Sendestrahlen (6) in das Faserbündel und/oder von Empfangsstrahlen (7) aus dem Faserbündel vorgesehen ist.

2. Lichtwellenleiter nach Anspruch 1, dadurch gekennzeichnet, dass der Reflektor aus einem gleichseitigen 90°-Prisma (5) besteht.

3. Lichtwellenleiter nach Anspruch 2, dadurch gekennzeichnet, dass das Prisma (5) einen Brechungsindex gegenüber Luft von mehr als 1,45 aufweist.

4. Lichtwellenleiter nach Anspruch 2 mit je einem Prisma für die Sende- und für die Empfangsstrahlen, dadurch gekennzeichnet, dass zwischen den beiden Prismen (5,5) eine Strahlenbarriere (9) angeordnet ist.

5. Lichtwellenleiter nach Anspruch 2, dadurch gekennzeichnet, dass das Prisma (5) aus Kunststoff besteht.

6. Lichtwellenleiter nach Anspruch 1, dadurch gekennzeichnet, dass sowohl für die Sende- (6) als auch für die Empfangsstrahlen (7) das selbe Faserbündel (1) verwendet ist.

7. Lichtwellenleiter nach Anspruch 6, dadurch gekennzeichnet, dass das Faserbündel (1) mindestens zwei Fasern aufweist.

8. Lichtwellenleiter nach Anspruch 1, gekennzeichnet durch einen Berührungstaster (10) zur Veränderung des Abstandes zwischen dem anderen Ende des Faserbündels (1) und einem Reflektor (13).

9. Verwendung des Lichtwellenleiters mit Koppelglied nach Anspruch 1 zur Bildung einer Lichtschranke.

10. Verwendung des Lichtwellenleiters mit Koppelglied nach Anspruch 8 im Zusammenhang mit dem Reflektor (13) zur Bildung einer Reflexionslichtschranke.

Fig.1

Fig.2

Fig.3

0151556